# EUROPEAN PATENT SPECIFICATION

(11) **EP 2 682 425 B1**
(45) Date of publication and mention of the grant of the patent: **20.07.2016**
(21) Application number: 12750254.0
(22) Date of filing: 23.02.2012
(51) Int. Cl.: C08L 23/10, B32B 15/085, B32B 27/32, C08K 5/09, C08L 23/04, C08L 51/06

(54) **RESIN COMPOSITION AND LAMINATED BODY**
HARZZUSAMMENSETZUNG UND LAMINIERTER KÖRPER
COMPOSITION DE RÉSINE ET CORPS STRATIFIÉ

(30) Priority: 25.02.2011 JP 2011040498
(43) Date of publication of application: 08.01.2014
(73) Proprietor: Mitsubishi Chemical Corporation, Chiyoda-ku Tokyo 100-8251 (JP)
(72) Inventor: YAMAGUCHI, Tatsuo, Mie 510-8530 (JP); FUTAMURA, Tatsuo, Mie 510-8530 (JP); KUROSE, Shohei, Mie 510-8530 (JP)
(74) Representative: Vossius & Partner Patentanwälte Rechtsanwälte mbB
(86) International application number: PCT/JP2012/054435
(87) International publication number: WO 2012/115195

(56) References cited:
- EP-A1- 2 110 408
- JP-A- 4 189 537
- JP-A- 58 089 642
- JP-A- 61 062 544
- JP-A- 63 205 345
- JP-A- 2000 072 941
- JP-A- 2001 294 836
- JP-A- 2003 146 357
- JP-A- 2004 238 438

## Description

### Technical Field

The present invention relates to a resin composition having excellent molding properties in lamination molding of a single layer or multiple layers and having good adhesion to a metal or a resin and to a laminate using the resin composition.

In more detail, the present invention relates to a resin composition having good adhesion to aluminum or a resin film and to a laminate using the resin composition.

### Background Art

Laminates having an adhesive resin layer laminated on a base material layer are widely used as a material for packaging the contents in which preservation of the quality is regarded as important, such as foods, drugs, etc. In the case where barrier properties (e.g., oxygen barrier properties, water vapor barrier properties, etc.) and light shielding properties are required for the packaging material, a metal layer is used as the base material layer of the laminate which is used for these applications. In addition, in the case where barrier properties and transparency are required for the packaging material, a special resin layer having barrier properties is used. As a method for laminating such a base material layer and an adhesive resin layer, extrusion lamination molding, thermal lamination molding, co-extrusion molding, and the like are adopted. Above all, the extrusion lamination molding is suitably adopted because a production rate is high.

However, in the extrusion lamination molding, since a molten adhesive resin or the like is laminated at a high speed on the surface of the base material layer which has already been formed into a film, the adhesive strength between the both layers is not always high. As a result, the resulting laminate encountered such a problem as the generation of separation at an interface between the base material layer and the adhesive resin layer, or the like. In particular, in the case of storing the laminate obtained by extrusion lamination molding over a long period of time, there was also involved such a problem that the adhesive strength between the both layers is lowered with a lapse of time due to influences such as an increase of temperature or humidity, etc.

In order to enhance the adhesion between the base material layer and the adhesive resin layer, it becomes necessary to make an extrusion rate at the time of extrusion lamination molding low, so that the high-speed molding properties which are an original characteristic feature of the extrusion lamination molding is significantly impaired.

As a method for solving such problems, there is, for example, disclosed a resin composition composed of propylene based polymer/tackifier/graft-modified propylene based polymer/polyethylene/ethylene·α-olefin random copolymer (see Patent Document 1).

In addition, as other dissolution method, there is exemplified a resin composition composed of propylene based sequential polymerization product/modified polypropylene based resin/olefin based resin (see Patent Document 2).

### Background Art Document

### Patent Document

Patent Document 1: JP-A-2004-269688
Patent Document 2: JP-A-2007-92027

### Summary of Invention

### Problem that Invention is to Solve

However, in the method described in Patent Document 1, not only there was a limit in the high-speed molding properties, but the adhesive strength in a high-temperature atmosphere at 100°C or higher where a sterilization treatment in food packaging containers is assumed was not sufficient. In addition, in Patent Document 1, though the tackifier is an essential constituent, if the tackifier is used, there was a concern that fuming is caused at the time of molding, or when used as a material for packaging oily beverages and edibles, a problem that the tackifier leaks out into the beverages and edibles is caused.

In addition, the method described in Patent Document 2 is focused on an improvement of adhesion, and it was not improved from the viewpoint of high-speed molding properties.

As described above, any resin composition having excellent high-speed extrusion lamination molding properties and good adhesion to a base material layer and also capable of maintaining the adhesion to the base material layer well even in a high-temperature environment could not be conventionally achieved.

Under such circumstances, an object of the present invention is to provide a resin composition which has excellent high-speed extrusion lamination molding properties, when used as an adhesive layer in a laminate, has good adhesion to a base material layer, and is capable of maintaining the adhesion to the base material layer well even in a high-temperature or high-humidity environment; and a laminate including a layer composed of the resin composition.

### Means for Solving Problem

In order to solve the foregoing problem, the present inventors made extensive and intensive investigations. As a result, it has been found that the foregoing problem can be solved by a resin composition using at least four kinds of specified polyolefin based resins in combination, leading to accomplishment of the present invention.

Specifically, the gist of the present invention includes the following [1] to [13].
[1] A resin composition, comprising the following components (A), (B), (C) and (D),
   wherein a content of the component (A) is from 0.5 to 40 % by weight, a content of the component (B) is from 20 to 80 % by weight, a content of the component (C) is from 1 to 30 % by weight, and a content of the component (D) is from 1 to 30 % by weight, relative to a total amount of these respective components:
   component (A): a polypropylene based resin containing the following component (a):
      component (a): a modified polypropylene obtained by modifying a polypropylene based resin with an unsaturated carboxylic acid or a derivative thereof;
   component (B): a propylene based copolymer containing a monomer unit based on propylene and a monomer unit based on at least either one of ethylene and an α-olefin other than propylene in a weight ratio of from 80/20 to 95/5;
   component (C): an ethylene·α-olefin copolymer containing a monomer unit based on ethylene and a monomer unit based on an α-olefin in a weight ratio of from 76/24 to 90/10; and
   component (D): a polyethylene based resin, which is an ethylene homopolymer or an ethylene based copolymer containing less than 10% by weight of a monomer unit other than ethylene (also referred to as "polyethylene (D)" herein).
[2] The resin composition in [1],
   wherein the component (A) contains the component (a) and the following component (b) in a weight ratio of from 1/99 to 100/0:
   component (b): a polypropylene based resin.
[3] The resin composition in [1] or [2],
   wherein the α-olefin constituting the component (C) has a carbon number of from 3 to 8.
[4] The resin composition in any one of [1] to [3],
   wherein the component (D) is a low density polyethylene produced by a high-pressure method.
[5] The resin composition in any one of [1] to [4],
   wherein a content of the unsaturated carboxylic acid or the derivative thereof in the resin composition is from 0.01 to 5 % by weight.
[6] The resin composition in any one of [1] to [5], which does not comprise a tackifier.
[7] The resin composition according to any one of [1] to [6], wherein component (B) is a propylene-ethylene copolymer.
[8] A laminate, comprising:
   a layer composed of the resin composition according to any one of [1] to [7].
[9] A laminate, comprising:
   a layer composed of the resin composition according to any one of [1] to [7]; and
   a base material layer.
[10] The laminate in [9], obtained by laminating the layer composed of the resin composition on the base material layer by extrusion lamination molding.
[11] The laminate in [9] above, obtained by laminating the layer composed of the resin composition and other resin layer on the base material layer by co-extrusion lamination molding.
[12] The laminate in any one of [9] to [11],
   wherein the layer composed of the resin composition and the base material layer come into contact with each other.
[13] The laminate in any one of [9] to [12],
   wherein the base material layer is a metal layer or a resin film.
[14] The laminate in [13],
   wherein the base material layer is made of aluminum.

### Effects of Invention

According to the present invention, a resin composition which has excellent high-speed extrusion lamination molding properties, when used as an adhesive layer in a laminate, has good adhesion to a base material layer, and is capable of maintaining the adhesion to the base material layer well even in a high-temperature or high-humidity environment; and a laminate including a layer composed of the resin composition are provided.

### Mode for Carrying Out Invention

The present invention is hereunder described in detail, but it should not be construed that the present invention is limited to the following description. The present invention can be carried out through an arbitrary modification within the range where the gist thereof is not deviated.

Here, in the present description, "% by mass" and "% by weight", "ppm by mass" and "ppm by weight", and "parts by mass" and "parts by weight" are synonymous with each other, respectively. In addition, when merely described as "ppm", it refers to "ppm by weight".

First of all, the resin composition of the present invention is described. The resin composition of the present invention is one containing the following components (A) to (D).
Component (A): Polypropylene based resin
Component (B): Propylene based copolymer
Component (C): Ethylene·α-olefin copolymer
Component (D): Polyethylene based resin

### (1) Polypropylene based resin (A):

The polypropylene based resin (A) which constitutes the resin composition of the present invention contains at least the following component (a) and can further contain the following component (b). In consequence, the polypropylene based resin (A) can be expressed as a "modified polypropylene based resin".
Component (a): Modified polypropylene obtained by modifying a polypropylene based resin with an unsaturated carboxylic acid or its derivative
Component (b): Polypropylene based resin

In the polypropylene based resin (A), the contents of the component (a) and the component (b) are preferably in a ratio of the component (a) to the component (b) of from 1/99 to 100/0 in terms of a weight ratio. That is, the polypropylene based resin (A) is a resin which when a total sum of the component (a) and the compound (b) is defined as 100 % by weight, contains from 1 to 100 % by weight of the component (a) and from 99 to 0 % by weight of the component (b).

In the present invention, the polypropylene based resin which is used as a raw material of the component (a) is not limited so long as it is one having a content of a propylene monomer unit of more than 50 % by weight, namely one having a content of a monomer unit other than propylene of less than 50 % by weight. The content of the monomer unit other than propylene is preferably not more than 20 % weight, more preferably not more than 10 % by weight, and still more preferably not more than 5 % by weight.

In the present invention, the polypropylene based resin which is used for the component (b) is one having a content of a monomer unit other than propylene of less than 5 % by weight. In addition, the polypropylene based resin which is used for the component (b) preferably has a density of more than 0.895 g/cm³.

The polypropylene based resin in the raw material of the component (a) and the component (b) is not particularly limited so long as it is corresponding to the foregoing. Examples thereof include a propylene homopolymer, a propylene-ethylene copolymer, a propylene·1-butene copolymer, a propylene-ethylene·1-butene copolymer, a propylene·4-methyl-1-pentene copolymer, a copolymer of propylene and other α-olefin, a copolymer of propylene and other vinyl monomer, and the like. Here, though the other α-olefin, namely an α-olefin other than propylene is not limited, in general, examples thereof include, in addition to ethylene, hydrocarbons having a double bond and having the carbon number of from 4 to 20, and preferably from 4 to 10. In addition, though the "other vinyl monomer" is not limited, examples thereof include vinyl acetate, vinyl alcohol, (meth)acrylic acid, (meth)acrylic acid alkyl esters, styrene, styrene derivatives, and the like.

In addition, in the polypropylene which is used for each of the components (a) and (b), two or more kinds of the foregoing resins may be used in combination. In addition, different resins or the same resin may be used for the respective components (a) and (b).

Incidentally, each of the foregoing copolymers may be any of a block copolymer, a graft copolymer, a random copolymer, and the like.

Of these, a propylene homopolymer, a propylene-ethylene copolymer, and a blend thereof are preferable as the raw material of the component (a) and the component (b), with a propylene homopolymer being more preferable.

The polypropylene based resin which is used for each of the components (a) and (b) is not limited in terms of tacticity, and a propylene chain thereof may be isotactic, syndiotactic, atactic, stereo block, or the like. The propylene chain is preferably isotactic, and in particular, isotactic homopolypropylene is preferable. In addition, as a catalyst used for the polymerization, those which are known can be properly adopted.

In the present invention, though a melt flow rate (MFR) of the polypropylene based resin which is used for each of the raw material of the component (a) and the component (b) is not particularly limited, it is generally from 0.5 to 50 g/10 min, preferably from 1 to 30 g/10 min, and more preferably from 2 to 25 g/10 min under a condition at 230°C and a load of 2.16 kg (21.2 N). When the MFR is smaller than the foregoing lower limit value, there is a concern that a cohesion of the single component is so strong that uniform mixing properties with other components is insufficient, and in addition thereto, there is a concern that an energy load on the occasion of producing the resin composition of the present invention is excessively large. In addition, when the MFR is larger than the foregoing upper limit value, the fluidity of the resin composition of the present invention is high (melt viscosity and melt tension are lowered), so that there is a tendency that the neck-in as an index of high-speed molding properties are lowered.

### [Component (a)]

In the present invention, the component (a) is a resin obtained by modifying the foregoing polypropylene based resin with an unsaturated carboxylic acid or its derivative.

The unsaturated carboxylic acid is preferably an α,β-ethylenically unsaturated carboxylic acid, Examples thereof include acrylic acid, methacrylic acid, ethacrylic acid, maleic acid, fumaric acid, tetrahydrofumaric acid, itaconic acid, citraconic acid, crotonic acid, isocrotonic acid, and the like. Examples of the derivative include acid anhydrides, carboxylic acid esters, and the like. Furthermore, the derivative may also be a derivative such as an acid halide, an amide, an imide, etc. The derivative is preferably an acid anhydride.

Of these, maleic acid or an anhydride thereof is especially suitable. In addition, a plurality of these compounds may be used in combination. Furthermore, a so-called vinylsilane such as vinyltrimethoxysilane, etc. or the like can also be used in combination with the unsaturated carboxylic acid or its derivative.

For the modification for obtaining the component (a), any method may be adopted, and the component (a) can also be obtained through a reaction only by heat. However, an organic peroxide capable of generating a radical on the occasion of the reaction, or the like may be added as a radical generator. In addition, examples of a technique for performing the reaction include a solution modification method for performing the reaction in a solvent, a melt modification method not using a solvent, and the like. Furthermore, other method such as a suspension dispersion reaction method, etc. may be adopted.

As the melt modification method, a method in which after previously mixing the polypropylene based resin and the unsaturated carboxylic acid or its derivative and if desired, a radical generator as described later, the mixture is melt kneaded in a kneading machine and allowed to react, a method in which a mixture of the radical generator and the unsaturated carboxylic acid or its derivative is added to the polypropylene based resin melted in a kneading machine from a charging port and allowed to react, and the like can be adopted. For mixing, in general, a Henschel mixer, a ribbon blender, a V-type blender, and the like can be used, and for melt kneading, in general, a single-screw or twin-screw extruder, a roll, a Banbury mixer, a kneader, a Brabender mixer, and the like can be used.

As the solution modification method, a method in which the polypropylene based resin is dissolved in an organic solvent or the like, to which are then added the radical generator and the unsaturated carboxylic acid or its derivative, and the mixture is graft copolymerized can be adopted. The organic solvent is not particularly limited, and for example, alkyl group-substituted aromatic hydrocarbons or halogenated hydrocarbons can be used.

Though a blending proportion of the polypropylene based resin and the unsaturated carboxylic acid or its derivative is not limited, it is desirable to blend the unsaturated carboxylic acid or its derivative in a proportion of generally from 0.01 to 30 parts by weight, preferably from 0.05 to 10 parts by weight, and more preferably from 0.1 to 5 parts by weight based on 100 parts by weight of the polypropylene based resin.

The radical generator is not limited. Specifically, however, organic peroxides or organic peresters such as benzoyl peroxide, dicumyl peroxide, di-tert-butyl peroxide, 2,5-dimethyl-2,5-di(peroxybenzoate)hexine-3, lauroyl peroxide, 2,5-dimethyl-2,5-di(tert-butylperoxy)hexine-3, 2,5-dimethyl-2,5-di(tert-butylperoxy)hexane, tert-butyl perbenzoate, tert-butyl perisobutyrate, tert-butyl perpivalate, cumyl perpivalate, etc., or azo compounds such as azobisisobutyronitrile, dimethyl azoisobutyrate, etc., or the like can be used.

These radical generators can be properly selected depending upon the kind or MFR of the polypropylene based resin as the raw material, the kind of the unsaturated carboxylic acid or its derivative, the reaction condition, and the like and may be used in combination of two or more kinds thereof. Though a blending amount of the radical generator is not limited, it is generally from 0.001 to 20 parts by weight, preferably from 0.005 to 10 parts by weight, more preferably from 0.01 to 5 parts by weight, and especially preferably from 0.01 to 3 parts by weight based on 100 parts by weight of the polypropylene based resin.

In the present invention, the modified polypropylene corresponding to the foregoing can be used solely, or can be used in admixture of two or more kinds thereof for the component (a).

Though an MFR (at 180°C and a load of 2.16 kg) of the component (a) is not limited, its lower limit is generally 0.1 g/10 min or more, preferably 1 g/10min or more, and more preferably 5 g/10min or more, and its upper limit is generally not more than 100,000 g/10 min, preferably not more than 50,000 g/10 min, more preferably not more than 30,000 g/10 min, and still more preferably not more than 10,000 g/10 min.

Though an amount of modification with the unsaturated carboxylic acid or its derivative in the component (a) is not limited, it is generally 0.01 % by weight or more, preferably 0.1 % by weight or more, and more preferably 0.3 % by weight or more, whereas it is generally not more than 10 % by weight, preferably not more than 7 % by weight, and more preferably not more than 5 % by weight. When the amount of modification with the unsaturated carboxylic acid or its derivative in the component (a) is lower than the foregoing lower limit value, there is a tendency that the adhesive performance of the resin composition of the present invention to the base material is lowered. In addition, when the amount of modification is higher than the foregoing upper limit value, there is a tendency that not only the thermal stability is lowered, but the compatibility with other components is lowered.

Here, the amount of modification means a content of the unsaturated carboxylic acid or its derivative component on the occasion of measurement with an infrared spectrophotometric analyzer. The amount of modification can be, for example, determined by measuring the absorption inherent to the carboxylic acid or its derivative in a sample formed by press molding in a sheet having a thickness of about 100 µm, specifically the characteristic absorption of carbonyl at from 1,900 to 1,600 cm⁻¹ (C=O stretching vibration band) (hereinafter the same). Incidentally, with respect to the modification with the unsaturated carboxylic acid or its derivative, there is a concern that the unsaturated carboxylic acid or its derivative which does not react with the polypropylene based resin also remains in the modified polypropylene without being subjected to the reaction to an extent of 100 %. However, it should be construed that the amount of modification in the present invention means a value on the occasion of measurement by the foregoing method.

It is arbitrary to contain the component (b), and a blending ratio of the component (a) and the component (b) is not limited. In the case of using the component (b) together with the component (a), when a total sum of the components (a) and (b) is defined as 100 % by weight, it is desirable that the proportion of the component (a) is generally 1 % by weight or more, preferably 5 % by weight or more, and more preferably 10 % by weight or more. By setting up the proportion of the component (a) to the foregoing lower limit value or more, there may be the case where the adhesive performance of the resin composition of the present invention to the base material is enhanced.

An amount of modification with the unsaturated carboxylic acid or its derivative in the component (A) is generally 0.01 % by weight or more, and preferably 0.03 % by weight or more, whereas it is generally not more than 10 % by weight, preferably not more than 7 % by weight, and more preferably not more than 5 % by weight. When the amount of modification with the unsaturated carboxylic acid or its derivative in the component (A) is lower than the foregoing lower limit value, there is a tendency that the adhesive performance of the resin composition of the present invention to the base material is lowered. In addition, when the amount of modification is higher than the foregoing upper limit value, there is a tendency that not only the thermal stability is lowered, but the compatibility with other components is lowered.

In addition, the component (a) or the component (A) can be subjected to a treatment for removing the unreacted unsaturated carboxylic acid or its derivative. Though this treatment method is not limited, specific examples thereof include a method in which the component (a) or the component (A) is charged into a storage tank having such a structure that a gas can be blown from a lower part of the apparatus, the apparatus is heated to about 100°C using a heater or a heating medium oil, and an inert gas such as nitrogen, etc. or air is blown from the lower part of the apparatus, followed by treatment for from 6 to 24 hours.

In the present invention, in the component (A), though the component (a) and the component (b) may be previously formed into a resin composition by means of melt kneading or the like, these components may be independently used and blended with other components as described later.

### (2) Propylene based copolymer (B)

In the present invention, the propylene based copolymer (B) is a copolymer containing propylene and at least either one of "ethylene" and an "α-olefin other than propylene". That is, examples thereof include a propylene·ethylene copolymer, a propylene·α-olefin other than propylene copolymer, and a propylene·ethylene·α-olefin other than propylene copolymer. Here, in the propylene based copolymer (B), the contents of the foregoing monomer units are in a ratio of the monomer unit based on propylene to the monomer unit based on at least either one of ethylene and an α-olefin other than propylene of from 80/20 to 95/5 in terms of a weight ratio. That is, when a total sum of the content of the monomer unit based on propylene and the content of the monomer unit based on at least either one of ethylene and an α-olefin other than propylene is defined as 100 % by weight, the content of the monomer unit based on propylene is from 80 to 95 % by weight, and the content of the monomer unit based on at least either one of ethylene and an α-olefin other than propylene is from 20 to 5 % by weight.

In addition, the propylene based copolymer (B) is preferably a propylene based copolymer having a melt flow rate (at 230°C and a load of 2.16 kg) of from 0.5 to 50 g/10 min. Furthermore, the propylene based copolymer (B) is preferably a propylene based copolymer having a density of not more than 0.895 g/cm³.

In the propylene based copolymer (B), a copolymerization ratio of propylene to at least either one of ethylene and an α-olefin other than propylene is preferably 94/6 to 83/17, and more preferably from 93/7 to 88/12 in terms of a weight ratio. That is, when a total sum of the content of the monomer unit based on propylene and the content of the monomer unit based on at least either one of ethylene and an α-olefin other than propylene is defined as 100 % by weight, it is preferably that the proportion of propylene is from 83 to 94 % by weight, whereas the proportion of at least either one of ethylene and an α-olefin other than propylene is from 17 to 6 % by weight; and it is more preferable that the proportion of propylene is from 88 to 93 % by weight, whereas the proportion of at least either one of ethylene and an α-olefin other than propylene is from 12 to 7 % by weight.

The case where the proportion of the monomer unit based on propylene is more than the foregoing upper limit is not preferable because the adhesive strength to the base material at ordinary temperature is low. In addition, the case where the proportion of the monomer unit based on propylene is less than the foregoing lower limit is not preferable because the adhesive strength to the base material at high temperatures is low.

Though the α-olefin other than propylene, which can be used as the raw material of the propylene based copolymer (B), is not limited, examples thereof include α-olefins having the carbon number of from about 4 to 10, such as 1-butene, 3-methyl-1-butene, 1-pentene, 4-methyl-1-pentene, 1-hexene, 1-octene, 1-decene, etc., and the like

Incidentally, the propylene based copolymer (B) may contain other monomer unit. Specifically, examples thereof include the "other vinyl monomer" in the raw material of the component (a) and the component (b) as described above.

In the present invention, though the melt flow rate (at 230°C and a load of 2.16 kg) of the propylene based copolymer (B) is not limited, it is desirable that the melt flow rate is generally 0.5 g/10 min or more, preferably 1 g/10 min or more, and more preferably 2 g/10 min or more; whereas it is desirable that the melt flow rate is generally not more than 50 g/10 min, preferably not more than 35 g/10 min, and more preferably not more than 25 g/10 min. In the case where the melt flow rate of the propylene based copolymer (B) is more than the foregoing upper limit, there is a non-preferred tendency because the compatibility with other components is lowered, the fluidity of the resin composition of the present invention is high, and the neck-in as an index of high-speed molding properties are lowered. In addition, in the case where the melt flow rate is less than the foregoing lower limit, there is a non-preferred tendency because a cohesion of the single component is so strong that uniform mixing properties with other components is insufficient.

In the present invention, though the density of the propylene based copolymer (B) is not limited, it is desirable that the density is generally not more than 0.895 g/cm³, and preferably not more than 0.880 g/cm³. In the case where the density of the propylene based copolymer (B) is more than the foregoing upper limit, there is a tendency that the adhesive strength to the base material at ordinary temperature is low. In addition, though a lower limit of the density is not limited, it is generally 0.860 g/cm³ or more.

Conventionally, resin compositions which are used for laminates were provided by properly blending the component (a), the component (b), the component (c), the component (d), and the like in the present invention. In addition, in the case where the adhesion or molding properties are insufficient in such a constitution, it was carried out to add a tackifier. On the other hand, in the present invention, it has been able to find out a resin composition which by containing, as the component (B), a component different from the foregoing components, has excellent high-speed extrusion lamination molding properties, when used as an adhesive layer in a laminate, has good adhesion to a base material layer, and is capable of maintaining the adhesion to the base material layer well even in a high-temperature or high-humidity environment.

Though factors for which these effects are revealed have not been elucidated yet, the following may be considered. That is, the component (a) is one for imparting adhesion to a variety of base materials; the component (C) is effective for stress relaxation after molding; and the component (D) is effective for molding properties such as draw-down, neck-in, etc. Unless these components are sufficiently compatibilized to form a uniform or finely dispersed phase, the performance cannot be sufficiently exhibited. Here, the component (B) is a resin which is extremely analogous to the components (a) and (b) from the standpoint of chemical structure and at the same time, is analogous to the component (C) in the physical structure (crystal structure). Furthermore, the component (C) is analogous to the component (D) from the standpoint of chemical structure. In consequence, it may be considered that by containing the component (B), affinity among the respective components increases, so that effects for enhancing the adhesive performance, the high-speed molding properties, and the like are revealed.

Commercially available products can also be used as such a propylene based copolymer (B) which is suitable in the present invention. For example, those corresponding to the foregoing properties can be properly selected among "VERSIFY" series, manufactured by The Dow Chemical Company; "VISTAMAX" series, manufactured by ExxonMobil Chemical Company; and the like.

### (3) Ethylene·α-olefin copolymer (C)

In the present invention, the ethylene·α-olefin copolymer (C) contains a monomer unit based on ethylene and a monomer unit based on an α-olefin. Then, the contents of these monomer units are in a ratio of the monomer unit based on ethylene to the monomer unit based on an α-olefin of from 76/24 to 90/10 in terms of a weight ratio. That is, when a total sum of the content of the monomer unit based on ethylene and the content of the monomer unit based on an α-olefin is defined as 100 % by weight, the content of the monomer unit based on ethylene is from 76 to 90 % by weight, and the content of the monomer unit based on an α-olefin is from 10 to 24 % by weight.

As for a copolymerization ratio of ethylene to the α-olefin in the ethylene·α-olefin copolymer (C), when a total sum of the content of the monomer unit based on ethylene and the monomer unit based on an α-olefin is defined as 100 % by weight, the proportion of ethylene is from 80 to 90 % by weight, and the proportion of the α-olefin is from 10 to 20 % by weight.

The case where the proportion of the monomer unit based on ethylene is more than the foregoing upper limit value is not preferable because the affinity with a polypropylene matrix based on the component (A) or component (B) is lowered, so that the fine dispersibility of the resin composition is insufficient. In addition, the case where the proportion of the monomer unit based on ethylene is less than the foregoing lower limit value is not preferable because the affinity with the component (D) is lowered, so that the fine dispersibility of the resin composition is similarly insufficient.

The α-olefin which constitutes the ethylene·α-olefin copolymer (C) is not limited. Specifically, however, examples thereof include propylene, 1-butene, 3-methyl-1-butene, 1-pentene, 4-methyl-1-pentene, 1-hexene, 1-octene, 1-decene, and the like. Of these, those having the carbon number of from 3 to 8 are preferable as the α-olefin.

Furthermore, a comonomer other than ethylene and the foregoing α-olefin may be used for the ethylene·α-olefin copolymer (C). In the case of using such a comonomer, though its content is not limited, it is preferable that a total content of the comonomer and the α-olefin falls within the foregoing range of the α-olefin content. Specifically, examples of the comonomer include the "other vinyl monomer" in the raw material of the component (a) and the component (b) as described above.

Commercially available products can also be used as such an ethylene·α-olefin copolymer (C) which is suitable in the present invention. For example, those corresponding to the foregoing properties can be properly selected among "TAFMER" series, manufactured by Mitsui Chemicals, Inc. and the like.

### (4) Polyethylene (D)

In the present invention, the polyethylene (D) is an ethylene homopolymer or an ethylene based copolymer containing less than 10 % by weight of a monomer unit other than ethylene.

The polyethylene (D) is not particularly limited so long as it is corresponding to the foregoing. Examples thereof include (branched or linear) ethylene homopolymers such as low, middle or high density polyethylene, etc.; ethylene·α-olefin copolymers such as an ethylene-propylene copolymer, an ethylene·1-butene copolymer, an ethylene-propylene·1-butene copolymer, an ethylene-4-methyl-1-pentene copolymer, an ethylene-1-hexene copolymer, an ethylene-1-octene copolymer, etc.; ethylene based copolymers such as an ethylene-vinyl acetate copolymer, an ethylene-vinyl alcohol copolymer, an ethylene·(meth)acrylic acid copolymer, an ethylene·(meth)acrylic acid alkyl ester copolymer, etc.; and the like. Furthermore, it is possible to use not only the foregoing polymer solely but a blend of two or more kinds of the polymers. Incidentally, the each of the foregoing copolymers may be any of a block copolymer, a graft copolymer, a random copolymer, and the like.

Above all, a low density polyethylene produced by a high-pressure method which has an excellent balance between heat resistance and strength, high density polyethylene, and an ethylene·α-olefin copolymer containing less than 10 % by weight of a monomer unit other than ethylene are preferable as the polyethylene (D).

Though physical properties of the polyethylene (D) are not particularly limited, a melt flow rate (MFR) measured at 190°C and a load of 2.16 kg (21.2 N) in conformity with JIS K7210 (1999) is generally 1 g/10 min or more, and preferably 3 g/10 min or more, whereas it is generally not more than 150 g/10 min, preferably not more than 100 g/10 min, more preferably not more than 60 g/10 min, and still more preferably not more than 30 g/10 min. In all of the case where the MFR of the polyethylene (D) is lower than the foregoing lower limit value and the case where it is higher than the foregoing upper limit value, there is a tendency that the fine dispersibility in the resin composition is insufficient, and the high-speed molding properties are lowered.

### (5) Other components

In addition to the foregoing components (A) to (D), an additive, a resin, and the like (hereinafter, sometimes referred to as "other components") can be blended in the resin composition of the present invention within the range where the effects of the present invention are not remarkably impaired. These other components may be used solely, or two or more kinds thereof may be used in arbitrary combination and ratio.

The additive which can be used in the resin composition of the present invention is not limited. Specifically, however, examples thereof include a heat-resistant stabilizer, a weatherproof stabilizer (e.g., an antioxidant, a light stabilizer, an ultraviolet ray absorber, etc.), a flame retardant, an anti-blocking agent, a slipping agent, an antistatic agent, a filler (e.g., an inorganic and/or organic filler, etc.), a processing aid, a plasticizer, a crystal nucleating agent, an impact modifier, a compatibilizer, a neutralizing agent of catalyst residues, carbon black, a coloring agent (e.g., a pigment, a dye, etc.), and the like. In the case of using such an additive, though its content is not limited, it is desirable that the content of the additive is generally 0.01 % by weight or more, and preferably 0.2 % by weight or more, whereas it is generally not more than 5 % by weight, and preferably not more than 2 % by weight, relative to the resin composition. Incidentally, in the case of using the resin composition of the present invention as a master batch, such an additive can also be contained in a concentration of from 2 to 50 times, and preferably from 3 to 30 times the foregoing content.

Incidentally, a tackifier can also be used as other component in the resin composition of the present invention. Here, as the tackifier, there is exemplified an amorphous resin which is solid at ordinary temperature, and examples thereof include petroleum resins, rosin resins, terpene resins, and hydrogenated product thereof, and the like. However, when a large amount of the tackifier is contained in the resin composition, there is a concern that fuming is caused at the time of molding, or when used as a material for packaging oily beverages and edibles, the tackifier leaks out into the beverages and edibles. Accordingly, even in the case of using the tackifier, the tackifier is contained in a proportion of preferably not more than 10 % by weight, more preferably not more than 5 % by weight, still more preferably not more than 2 % by weight, and especially preferably less than 1 % by weight in the resin composition. It is the most preferable that the tackifier is not substantially contained. Even in the case of not using the tackifier, the resin composition of the present invention has excellent high-speed extrusion lamination molding properties, when used as an adhesive layer in a laminate, has good adhesion to a base material layer, and is capable of maintaining the adhesion to the base material layer well even in a high-temperature or high-humidity environment.

Examples of the petroleum resin include aliphatic petroleum resins, aromatic petroleum resins, and copolymers and hydrogenated product thereof, and the like. Examples of a skeleton of the petroleum resin include C5 resins, C9 resins, C5/C9 copolymer resins, cyclopentadiene based resins, polymers of a vinyl-substituted aromatic compound, olefin/vinyl-substituted aromatic compound copolymers, cyclopentadiene based compound/vinyl-substituted aromatic compound copolymers, and hydrogenated product thereof, and the like.

The rosin resin is a natural resin composed mainly of abietic acid. Examples thereof include natural rosin, polymerized rosin derived from natural rosin, stabilized rosin obtained by disproportionation or hydrogenation of natural rosin or polymerized rosin, unsaturated acid-modified rosin obtained by addition of an unsaturated carboxylic acid to natural rosin or polymerized rosin, a natural rosin ester, a modified rosin ester, a polymerized rosin ester, and the like.

Examples of the terpene resin include polyterpene resins, aromatic terpene resins such as terpene phenol resins, etc., aromatic modified terpene resins, and hydrogenated product thereof.

The resin which is used as other component is not limited. Specifically, however, examples thereof include polyphenylene ether based resins; polycarbonate resins; polyamide based resins such as nylon 66, nylon 11, etc.; polyester based resins such as polyethylene terephthalate, polybutylene terephthalate, etc.; styrene based resins such as polystyrene, etc.; acrylic/methacrylic based resins such as polymethyl methacrylate based resins, etc.; and the like.

### (6) Resin composition

As for a blending ratio of the components (A), (B), (C) and (D) in the resin composition of the present invention, the content of the component (A) is from 0.5 to 40 % by weight, the content of the component (B) is from 20 to 80 % by weight, the content of the component (C) is from 1 to 30 % by weight, and the content of the component (D) is from 1 to 30 % by weight, relative to a total amount of these components.

The case where the content of the component (A) is more than the foregoing upper limit value is not preferable because the adhesive strength to the base material at ordinary temperature is low. In addition, the case where the content of the component (A) is less than the foregoing lower limit value is not preferable because the adhesive strength to the base material at high temperatures is low.

The case where the content of the component (B) is more than the foregoing upper limit value is not preferable because the adhesive strength to the base material at high temperatures is low. In addition, the case where the content of the component (B) is less than the foregoing lower limit value is not preferable because the adhesive strength to the base material at ordinary temperature is low.

The case where the content of the component (C) is more than the foregoing upper limit value is not preferable because the adhesive strength to the base material at high temperatures is low. In addition, the case where the content of the component (C) is less than the foregoing lower limit value is not preferable because not only the high-speed molding properties tend to be lowered, but the adhesive strength to the base material at ordinary temperature is low.

The case where the content of the component (D) is more than the foregoing upper limit value is not preferable because the adhesive strength to the base material at ordinary temperature is low. In addition, the case where the content of the component (D) is less than the foregoing lower limit value is not preferable because the high-speed molding properties tend to be lowered.

For the same reasons as those in the blending ratio of the component (A) as described above, the content of the component (A) is preferably 1 % by weight or more, and more preferably 3 % by weight or more, whereas it is preferably not more than 35 % by weight, and more preferably not more than 30 % by weight.

For the same reasons as those in the blending ratio of the component (B) as described above, the content of the component (B) is preferably 25 % by weight or more, and more preferably 30 % by weight or more, whereas it is preferably not more than 70 % by weight, and more preferably not more than 60 % by weight.

For the same reasons as those in the blending ratio of the component (C) as described above, the content of the component (C) is preferably 5 % by weight or more, and more preferably 10 % by weight or more, whereas it is preferably not more than 25 % by weight.

For the same reasons as those in the blending ratio of the component (D) as described above, the content of the component (D) is preferably 5 % by weight or more, and more preferably 10 % by weight or more, whereas it is preferably not more than 28 % by weight, and more preferably not more than 26 % by weight.

Though an MFR of the resin composition of the present invention is not particularly limited, from the standpoint of molding properties, it is generally from 5 to 50 g/10 min, and preferably from 7 to 30 g/10 min under a condition at 230°C and a load of 2.16 kg.

In the resin composition of the present invention, a content of the unsaturated carboxylic acid or its derivative in the resin composition is generally 0.01 % by weight or more, preferably 0.05 % by weight or more, and more preferably 0.07 % by weight or more, whereas it is generally not more than 5 % by weight, preferably not more than 4 % by weight, and more preferably not more than 3 % by weight. When the content of the unsaturated carboxylic acid or its derivative in the resin composition is lower than the foregoing lower limit value, there is a tendency that the adhesive performance to the base material is lowered. In addition, when the subject content is higher than the foregoing upper limit value, there is a tendency that not only the thermal stability is lowered, but the compatibility with other materials is lowered. Here, a method for measuring the content of the unsaturated carboxylic acid or its derivative in the resin composition is the same as the method for measuring the amount of modification with the unsaturated carboxylic acid or its derivative in the component (a) as described above.

The resin composition of the present invention can be obtained by mixing the foregoing respective components in prescribed proportions.

The mixing method is not particularly limited so long as the raw material components are uniformly dispersed. That is, a composition in which the respective components are uniformly distributed can be obtained by mixing the foregoing respective raw material components and the like at the same time or in an arbitrary order.

In order to achieve more uniform mixing and dispersion, it is preferable to melt mix prescribed amounts of the foregoing raw material components. For example, the respective raw material components and the like of the resin composition of the present invention may be mixed in an arbitrary order and then heated, or all of the raw material components and the like are successively mixed while melting. Also, a mixture of the respective raw material components and the like may be pelletized or melt mixed at the time of molding on the occasion of producing a desired molded article.

The resin composition of the present invention can be prepared by a variety of known techniques, for example, a technique in which the respective raw material components and the like are mixed using a tumbler blender, a V blender, a ribbon blender, a Henschel mixer, or the like, and after mixing, the resulting mixture is melt kneaded with a single-screw extruder, a twin-screw extruder, a Banbury mixer, a kneader, or the like, followed by granulation or pulverization. A temperature at the time of melt kneading may be a temperature at which at least one of the respective raw material components is in a molten state. In general, a temperature at which all of the components to be used are melted is selected, and the melt kneading is generally performed at a temperature ranging from 150 to 300°C.

The resin composition of the present invention may not be used as an independent raw material so long as it contains the foregoing components (A) to (D). That is, a resin composition already containing two or more members of these components may be used as the raw material, or a material obtained by pulverizing an already formed molded article composed of the resin composition may be used as the raw material. In addition, in the case where a raw material which has been previously formed into a resin composition does not have all of the components constituting the present invention, only a deficient component or components may be compensated as the raw material.

### (7) Molded article

The molded article obtained from the resin composition of the present invention is not limited, and it can be formed into a variety of extrusion molded articles or injection molded articles. In addition, the resin composition of the present invention can be used solely and formed into a molded article such as a single-layered sheet, etc. However, since the resin composition of the present invention is excellent in terms of an adhesiveness to a variety of metals or resins as described later, it is more effective to utilize the resin composition of the present invention as a laminate using such a metal or resin as the base material.

### (8) Laminate

Next, the laminate of the present invention is described. The laminate of the present invention is a laminate obtained by laminating two layers or three or more layers containing an adhesive layer composed of the resin composition of the present invention as described above (hereinafter sometimes referred to as a "resin composition layer"). Specifically, examples thereof include a laminated sheet, a laminated film, a laminated tube, and the like. Here, all of the "sheet" and the "film" mean a planar molded body, and the both are synonymous with each other.

The laminate of the present invention has at least a layer composed of the resin composition of the present invention and a base material layer. The material constituting the base material layer is not limited. Specifically, however, examples thereof include a metal layer, a resin film, and the like. In addition, though a layer constitution of the layer composed of the resin composition of the present invention and the base material layer is not limited, the case where these layers are adjacent to each other is preferable.

In the case where the base material layer is a metal layer, a metal constituting the metal layer is not limited. Specifically, however, examples thereof include aluminum, iron, copper, stainless steel, and the like. Above all, aluminum is preferable.

In the case where the base material layer is a resin film, a resin constituting the resin film is not limited. Specifically, however, olefin based polymers or olefin based elastomers containing an ethylene-vinyl alcohol copolymer, polyamide resins, polyester resins or polyester based elastomers, styrene based resins or styrene based elastomers, acrylic resins, and the like are suitably used. Above all, when used for a material for foods or drugs, it is preferable to have at least an ethylene-vinyl alcohol copolymer layer or a polyamide resin layer.

Two or more kinds of these resin films may be laminated. In addition, the resin film may be either a stretched film or a non-stretched film, or may be a combination thereof. Furthermore, the resin film may be a resin film having a metal vapor deposited thereon.

Furthermore, a film in which a metal and a resin are laminated can be used. In such a film, plural metal layers or resin layers may be used.

The olefin based polymer other than the ethylene·vinyl alcohol copolymer as the resin film is not limited. Above all, ethylene based resins, polypropylene based resins, and the like are suitably used.

The polyamide resin as the resin film is not limited. Specifically, however, nylon 6, nylon 66, nylon 610, nylon 9, nylon 11, nylon 12, nylon 6/66, nylon 66/610, nylon 6/11, MXD nylon, amorphous nylon, a terephthalic acid/adipic acid/hexamethylenediamine copolymer, and the like are preferably used. Above all, nylon 6, nylon 66, and nylon 6/66, each having excellent melting point and stiffness, etc., are preferable.

In the laminate of the present invention, an arbitrary layer other than the resin composition layer of the present invention and the foregoing base material layer can be provided. Though a material constituting such a layer is not limited, the layer is generally a resin layer. In the case where the arbitrary layer is a resin layer, a resin constituting the resin layer is not limited. Specifically, however, the resins exemplified for the components (a), (b), (B), (C) and (D), etc. in the present invention, and other components in the resin composition of the present invention as described above, and the like can be used.

As a method for producing the laminate of the present invention, a variety of methods which have hitherto been known can be adopted. In particular, extrusion lamination molding is suitable. According to the extrusion lamination molding, the laminate can be obtained stably at a high speed, and hence, the extrusion lamination molding is preferable. In particular, even in the case of performing the lamination under a high-speed condition at 100 m/min or more, the resin composition of the present invention has excellent molding properties and good adhesion to the base material layer and is able to be formed into a laminate capable of maintaining the adhesion to the base material layer well even in a high-temperature or high-humidity environment.

For the extrusion lamination molding, not only one kind of a base material layer is used in advance as a film, but two or more kinds of films may be used. In that case, though these films may be molded by means of simultaneous sticking, lamination molding may be once performed using one of the base materials, followed by sticking the other base material(s). In addition, the resins to be laminated are not limited to the case of using only one kind, but two or more kinds of resins may be co-extruded.

The resin composition of the present invention is generally used as a laminate resin in the extrusion lamination molding. However, it is not excluded, too that this is previously formed into a film, followed by using the film as the base material layer.

The laminate of the present invention may be laminated by the foregoing method or the like and then stretched to form a stretched film. In such case, it is desirable to use a non-stretched resin film or sheet as the base material layer.

As a method for producing the stretched film, a variety of methods which have hitherto been known can be adopted. As for the stretching direction, the stretching may be either uniaxial stretching or biaxial stretching. In addition, the stretched film may be produced by means of successive stretching, or may be produced by means of simultaneous stretching. In addition, as one of the stretching methods, the laminate may be formed into an inflation film by performing inflation molding at a stage of producing the laminate.

In the case of obtaining the laminate of the present invention by means of stretching, after stretching as described above, the resultant may be subjected to thermal fixation, or may be formed into a product without performing thermal fixation. In the case where the thermal fixation is not performed, the laminate can be used as a shrink film because of such properties that by subsequently heating the laminate, its stress is released to cause shrinkage.

A thickness of each of the layers of the laminate of the present invention is not limited, and it can be arbitrarily set up depending upon a layer constitution, an application, a shape of the final product, required physical properties, and the like. A total thickness of the laminate is generally from 5 to 400 µm, preferably from 10 to 300 µm, and especially preferably from 20 to 200 µm. In addition, a thickness of the adhesive layer constituting the laminate is generally from 0.1 to 100 µm, preferably from 0.3 to 50 µm, and especially preferably from 0.5 to 20 µm.

The resin composition according to the present invention exhibits excellent adhesive strength properties to a metal layer or a resin film. Accordingly, the laminate according to the present invention can be suitably used as meat packaging films for hams, etc., packaging materials for general foods such as cocked rice, fresh sweets, etc., packaging materials for retort foods such as curry, stew, etc., and the like. In addition, the laminate according to the present invention can also be suitably used as packaging materials for medical supplies or drugs.

### Examples

The present invention is hereunder described in detail by reference to Examples, but unless the gist of the present invention is deviated, it should not be construed that the present invention is limited to the following Examples.

Raw materials used in the following Examples and Comparative Examples are as follows. Incidentally, the ethylene content of the component (B) is a value measured using an infrared spectrophotometric analysis method (FT/IR610, manufactured by JASCO Corporation).

### <Component (A)>

- a-1: Maleic anhydride graft-modified polypropylene
   (Graft rate: 2.5 % by weight, MFR (at 180°C and a load of 2.16 kg) (value measured using an orifice having a diameter of 1 mmφ and a length of 8 mm): 450 g/10 min (corresponding to 7,200 g/10 min in the case of measuring with an orifice having a diameter of 2 mmφ))
- a-2: Maleic anhydride graft-modified polypropylene
   (Graft rate: 0.4 % by weight, MFR (at 180°C and a load of 2.16 kg): 9 g/10 min)
- b-1: Polypropylene
   (Trade name: MA3Q for a propylene homopolymer, manufactured by Japan Polypropylene Corporation, MFR (at 230°C and a load of 2.16 kg): 10 g/10 min)
- b-2: Polypropylene
   (Trade name: MA1Q for a propylene homopolymer, manufactured by Japan Polypropylene Corporation, MFR (at 230°C and a load of 2.16 kg): 20 g/10 min)
- b-3: Polypropylene
   (Trade name: NOVATEC MA8Q for a propylene homopolymer, manufactured by Japan Polypropylene Corporation, MFR (at 230°C and a load of 2.16 kg): 0.9 g/10 min)
- b-4: Polypropylene
   (Trade name: NOVATEC MG3F for a propylene-ethylene copolymer, manufactured by Japan Polypropylene Corporation, MFR (at 230°C and a load of 2.16 kg): 8 g/10 min, density: 0.90 g/cm³, ethylene content: 3 % by weight)
- b-5: Polypropylene
   (Trade name: MOPLEN HF501N for a propylene homopolymer, manufactured by LyondellBasell Industries, MFR (at 230°C and a load of 2.16 kg): 12 g/10 min, density: 0.90 g/cm³)
- b-6: Propylene·ethylene copolymer
   (Trade name: VERSIFY 3000, manufactured by The Dow Chemical Company, MFR (at 230°C and a load of 2.16 kg): 8 g/10 min, density: 0.891 g/cm³, ethylene content: 3.6 % by weight)

### <Component B>

- B-1: Propylene-ethylene copolymer
   (Trade name: VERSIFY 4200, manufactured by The Dow Chemical Company, MFR (at 230°C and a load of 2.16 kg): 25 g/10 min, density: 0.876 g/cm³, ethylene content: 7.7 % by weight)
- B-2: Propylene·ethylene copolymer
   (Trade name: VERSIFY 3300, manufactured by The Dow Chemical Company, MFR (at 230°C and a load of 2.16 kg): 8 g/10 min, density: 0.866 g/cm³, ethylene content: 9.2 % by weight)
- B-3: Propylene-ethylene copolymer
   (Trade name: VERSIFY 3401, manufactured by The Dow Chemical Company, MFR (at 230°C and a load of 2.16 kg): 8 g/10 min, density: 0.865 g/cm³, ethylene content: 10 % by weight)
- B-4: Propylene-ethylene copolymer
   (Trade name: VERSIFY 2400, manufactured by The Dow Chemical Company, MFR (at 230°C and a load of 2.16 kg): 2 g/10 min, density: 0.863 g/cm³, ethylene content: 9.5 % by weight)
- B-5: Propylene-ethylene copolymer
   (Trade name: VERSIFY 2300, manufactured by The Dow Chemical Company, MFR (at 230°C and a load of 2.16 kg): 2 g/10 min, density: 0.866 g/cm³, ethylene content: 12 % by weight)

### <Component (C)>

- C-1: Ethylene·α-olefin copolymer
   (Trade name: TAFMER A4085S, manufactured by Mitsui Chemicals, Inc., MFR (at 190°C and a load of 2.16 kg): 3.6 g/10 min, density: 0.885 g/cm³, 1-butene content: 18 % by weight)

### <Component (D)>

- D-1: Polyethylene
   (Trade name: NOVATEC LC522 for high-pressure-method low density polyethylene, manufactured by Japan Polyethylene Corporation, MFR (at 190°C and a load of 2.16 kg): 4 g/10 min)
- D-2: Polyethylene
   (Trade name: LDPE23L430 for a polyethylene homopolymer, manufactured by INEOS, MFR (at 190°C and a load of 2.16 kg): 4.1 g/10 min, density: 0.924 g/cm³)

### (Example 1)

9.0 % by weight of a-1, 21.0 % by weight of b-1, 35.0 % by weight of B-3, 20.0 % by weight of C-1, and 15.0 % by weight of D-1 were previously mixed in a total sum of 100 % by weight by means of dry blending, and the mixture was melt kneaded using a twin-screw extruder PCM45, manufactured by Ikegai Seisakusho at a temperature of 200°C and a screw rotation rate of 300 rpm in an extrusion amount of 25 kg/hr. The kneaded mixture was extruded into a string form, cooled, and then cut, thereby obtaining a resin composition in a pellet shape.

### (Examples 2 to 7 and Comparative Examples 1 to 5)

Resin compositions were obtained by performing the melt kneading in the same method as that in Example 1, except for changing the raw materials and their blending proportions to those shown in Table 1. However, in Examples 3 and 6, in addition to the respective materials shown in Table 1, DHT4A (a hydrotalcite compound, manufactured by Kyowa Chemical Industry Co., Ltd.) was added in an amount of 0.1 % by weight based on 100 % by weight of the total amount thereof.

### <Extrusion lamination molding>

Using random polypropylene as an external layer and each of the resin compositions obtained in the foregoing Examples 1 to 7 and Comparative Examples 1 to 5 as an internal layer (adhesive layer), a laminate for evaluation of adhesive strength composed of 20 µm of the external layer and 10 µm of the internal layer was obtained in the following molding method.

### <Molding apparatus and molding condition>

- Molding machine: Two double-layer co-extrusion lamination molding machines, manufactured by Sumitomo Heavy Industries Modem, Ltd. (all of the extruders are a single-screw extruder)
- Cooling roll: Semi-matte roll
- Anchor: Nil, Ozone: Nil
- Air gap: 120 mm fixed
- Die width: 420 mm, Lip thickness: 0.8 mm
- Die temperature: 280 to 285°C
- Resin temperature: 280 to 285°C
- Extruder rotation number of internal layer: 100 rpm
- Extruder rotation number of external layer: 200 rpm
- Molding speed (take-up speed of base material): 60 m/min

### <Layer constitution>

- Base material: Multilayred film of aluminum (7 µm)/polyethylene (15 µm)/polyethylene terephthalate (12 µm)
- Internal layer (adhesive layer) (10 µm): Resin composition as obtained above
- External layer (20 µm): Random polypropylene (trade name: NOVATEC FL02A, manufactured by Japan Polypropylene Corporation, MFR (at 230°C and a load of 2.16 kg): 25 g/10 min)

### <Evaluation of draw-down (DD) properties>

Extrusion lamination molding was performed under the above-described extrusion lamination molding conditions, except for changing the base material to a craft paper and not using the external layer. The molding speed (take-up speed of base material) was increased in a state of fixing the extruder rotation number of internal layer (adhesive layer) to the condition of the extrusion lamination molding as described above, thereby confirming a critical speed at which film breakage occurred. The critical speed is favorably higher. A sample having a critical speed of 100 mm/min or more was defined to be good enough. The evaluation results are shown in Table 1.

### <Evaluation of neck-in (NI)>

Extrusion lamination molding was performed under the above-described extrusion lamination molding conditions, except for changing the base material to a craft paper and not using the external layer. The extruder rotation number of internal layer (adhesive layer) was set up at 195 rpm, and a width of the laminated film was measured. A difference of the measured width from a die width was defined as a numerical value of the neck-in. The neck-in is favorably smaller. A sample having a value of neck-in of not more than 100 mm was defined to be good enough. The evaluation results are shown in Table 1.

### <Evaluation of adhesive strength>

A sample was cut out in a width of 15 mm in the MD direction (extrusion direction) and evaluated under a condition at 23°C and 300 mm/min by the T separation process. Incidentally, in addition to the evaluation of the extrusion laminated laminate as it was, a laminate obtained by further aging the above-described laminate under a condition at 40°C for 60 hours was evaluated under the same condition. Furthermore, with respect to a part of the samples of the Examples and Comparative Examples, the evaluation was performed under a condition at a temperature of the separation test of 60°C or 111°C. These evaluation results are shown in Table 1.

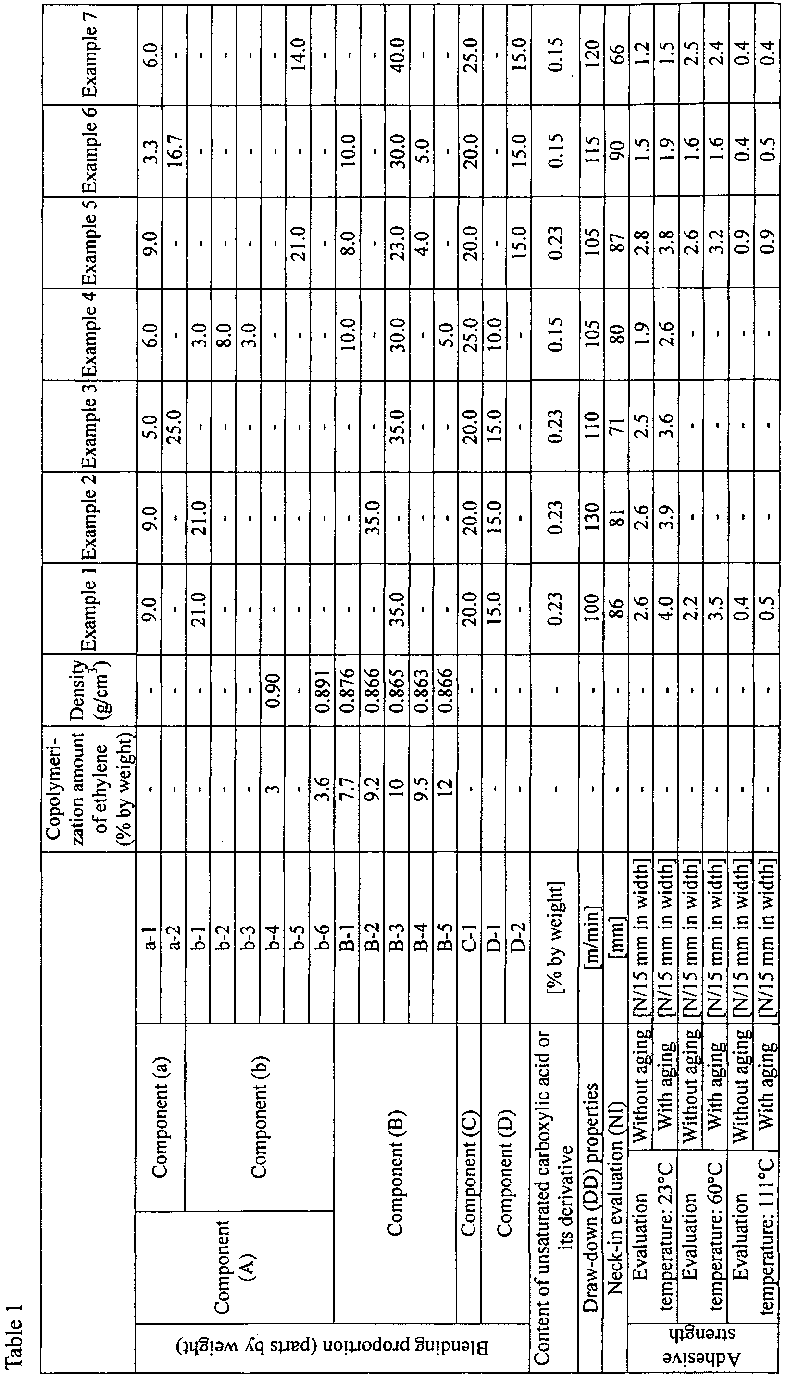

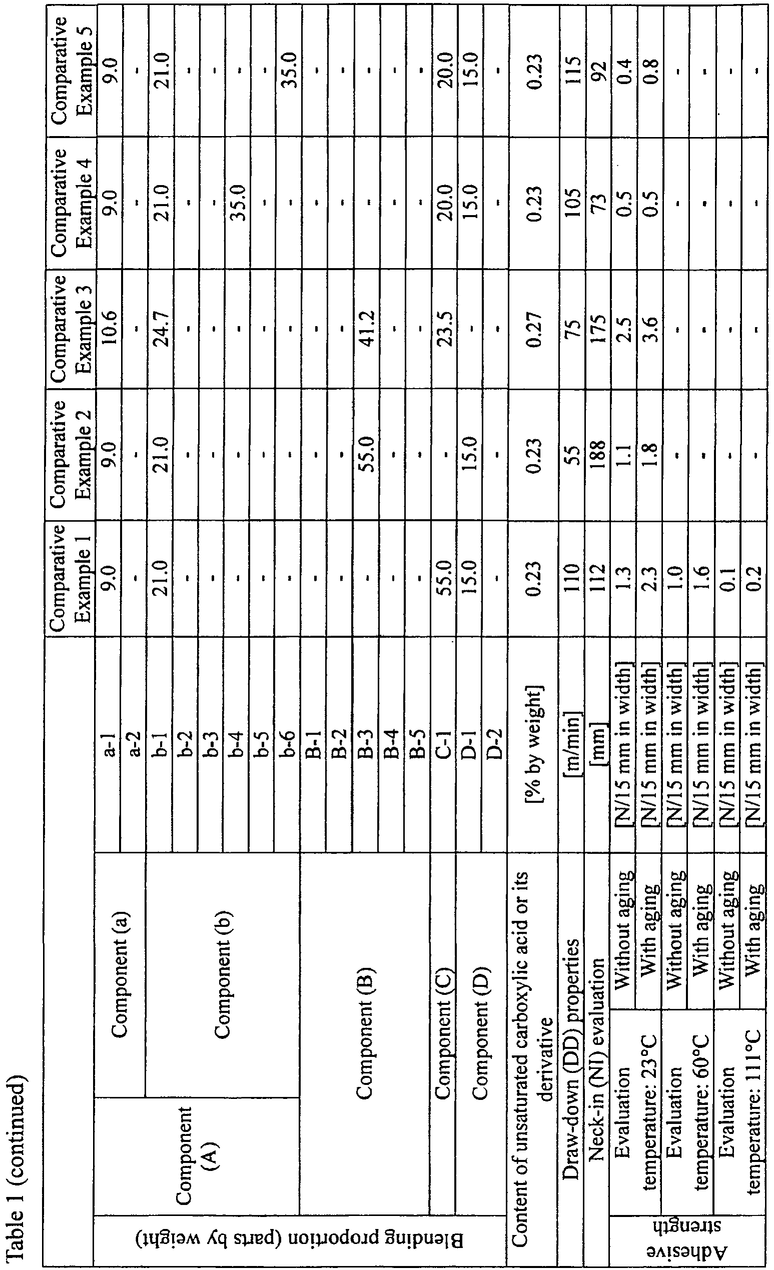

While the invention has been described in detail and with reference to specific embodiments thereof, it will be apparent to one skilled in the art that various changes and modifications can be made therein without departing from the spirit and scope thereof. The present application is based on a Japanese patent application filed on February 25, 2011 (Japanese Patent Application No. 2011-040498), the contents of which are incorporated herein by reference.

### Industrial Applicability

According to the present invention, a resin composition which has excellent high-speed extrusion lamination molding properties, when used as an adhesive layer in a laminate, has good adhesion to a base material layer, and is capable of maintaining the adhesion to the base material layer well even in a high-temperature or high-humidity environment; and a laminate including a layer composed of the resin composition are provided.

The resin composition according to the present invention exhibits excellent adhesive strength properties to a metal layer or a resin film. Accordingly, the laminate according to the present invention can be suitably used as meat packaging films for hams, etc., packaging materials for general foods such as cocked rice, fresh sweets, etc., packaging materials for retort foods such as curry, stew, etc., and the like. In addition, the laminate according to the present invention can also be suitably used as packaging materials for medical supplies or drugs.

## Claims

1. A resin composition, comprising the following components (A), (B), (C) and (D),
wherein a content of the component (A) is from 0.5 to 40 % by weight, a content of the component (B) is from 20 to 80 % by weight, a content of the component (C) is from 1 to 30 % by weight, and a content of the component (D) is from 1 to 30 % by weight, relative to a total amount of these respective components:
component (A): a polypropylene based resin containing the following component (a):
component (a): a modified polypropylene obtained by modifying a polypropylene based resin with an unsaturated carboxylic acid or a derivative thereof;
component (B): a propylene based copolymer containing a monomer unit based on propylene and a monomer unit based on at least either one of ethylene and an α-olefin other than propylene in a weight ratio of from 80/20 to 95/5;
component (C): an ethylene·α-olefin copolymer containing a monomer unit based on ethylene and a monomer unit based on an α-olefin in a weight ratio of from 76/24 to 90/10; and
component (D): an ethylene homopolymer or an ethylene based copolymer containing less than 10% by weight of a monomer unit other than ethylene.

2. The resin composition according to claim 1,
wherein the component (A) contains the component (a) and the following component (b) in a weight ratio of from 1 /99 to 100/0:
component (b): a polypropylene based resin.

3. The resin composition according to claim 1 or 2,
wherein the α-olefin constituting the component (C) has a carbon number of from 3 to 8.

4. The resin composition according to any one of claims 1 to 3,
wherein the component (D) is a low density polyethylene produced by a high-pressure method.

5. The resin composition according to any one of claims 1 to 4,
wherein a content of the unsaturated carboxylic acid or the derivative thereof in the resin composition is from 0.01 to 5 % by weight.

6. The resin composition according to any one of claims 1 to 5, which does not comprise a tackifier.

7. The resin composition according to any one of claims 1 to 6, wherein component (B) is a propylene-ethylene copolymer.

8. A laminate, comprising:
a layer composed of the resin composition according to any one of claims 1 to 7.

9. A laminate, comprising:
a layer composed of the resin composition according to any one of claims 1 to 7; and
a base material layer.

10. The laminate according to claim 9, obtained by laminating the layer composed of the resin composition on the base material layer by extrusion lamination molding.

11. The laminate according to claim 9, obtained by laminating the layer composed of the resin composition and other resin layer on the base material layer by co-extrusion lamination molding.

12. The laminate according to any one of claims 9 to 11,
wherein the layer composed of the resin composition and the base material layer come into contact with each other.

13. The laminate according to any one of claims 9 to 12, wherein the base material layer is a metal layer or a resin film.

14. The laminate according to claim 13,
wherein the base material layer is made of aluminum.

## Patentansprüche

1. Eine Harzzusammensetzung, umfassend die folgenden Komponenten (A), (B), (C) und (D),
wobei ein Gehalt der Komponente (A) 0,5 bis 40 Gew.-% beträgt, ein Gehalt der Komponente (B) 20 bis 80 Gew.-% beträgt, ein Gehalt der Komponente (C) 1 bis 30 Gew.-% beträgt und ein Gehalt der Komponente (D) 1 bis 30 Gew.-% beträgt, bezogen auf eine Gesamtmenge dieser jeweiligen Komponenten:
Komponente (A): ein Harz auf Polypropylenbasis, umfassend die folgende Komponente (a):
Komponente (a): ein modifiziertes Polypropylen, erhalten durch die Modifizierung eines Harzes auf Polypropylenbasis mit einer ungesättigten Carbonsäure oder einem Derivat davon;
Komponente (B): ein Copolymer auf Propylenbasis, umfassend eine Monomereinheit auf Propylenbasis und eine Monomereinheit auf Basis mindestens eines von Ethylen und eines anderen α-Olefins als Propylen in einem Gewichtsverhältnis von 80/20 bis 95/5;
Komponente (C): ein Ethylen-α-Olefin-Copolymer, umfassend eine Monomereinheit auf Ethylenbasis und eine Monomereinheit auf Basis eines α-Olefins in einem Gewichtsverhältnis von 76/24 bis 90/10; und
Komponente (D): ein Ethylen-Homopolymer oder ein Copolymer auf Ethylenbasis, enthaltend weniger als 10 Gew.-% einer anderen Monomereinheit als Ethylen.

2. Die Harzzusammensetzung gemäß Anspruch 1,
wobei die Komponente (A) die Komponente (a) und die folgende Komponente (b) in einem Gewichtsverhältnis von 1/99 bis 100/0 enthält:
Komponente (b): ein Harz auf Polypropylenbasis.

3. Die Harzzusammensetzung gemäß Anspruch 1 oder 2,
wobei das α-Olefin, welches die Komponente (C) bildet, eine Kohlenstoffzahl von 3 bis 8 aufweist.

4. Die Harzzusammensetzung gemäß einem der Ansprüche 1 bis 3,
wobei die Komponente (D) ein Polyethylen von niedriger Dichte ist, hergestellt in einem Hochdruckverfahren.

5. Die Harzzusammensetzung gemäß einem der Ansprüche 1 bis 4,
wobei ein Gehalt der ungesättigten Carbonsäure oder des Derivats davon in der Harzzusammensetzung 0,01 bis 5 Gew.-% beträgt.

6. Die Harzzusammensetzung gemäß einem der Ansprüche 1 bis 5, welche keinen Klebrigmacher umfasst.

7. Die Harzzusammensetzung gemäß einem der Ansprüche 1 bis 6, wobei Komponente (B) ein Propylen-Ethylen-Copolymer ist.

8. Ein Laminat, umfassend:
eine Schicht, welche aus der Harzzusammensetzung gemäß einem der Ansprüche 1 bis 7 zusammengesetzt ist.

9. Ein Laminat, umfassend:
eine Schicht, welche aus der Harzzusammensetzung gemäß einem der Ansprüche 1 bis 7 zusammengesetzt ist; und
eine Basismaterialschicht.

10. Das Laminat gemäß Anspruch 9, erhalten durch Laminieren der Schicht, welche aus der Harzzusammensetzung zusammengesetzt ist, auf die Basismaterialschicht durch Extrusionslaminierungsformen.

11. Das Laminat gemäß Anspruch 9, erhalten durch Laminieren der Schicht, welche aus der Harzzusammensetzung zusammengesetzt ist und einer anderen Harzschicht, auf die Basismaterialschicht durch Co-Extrusionslaminierungsformen.

12. Das Laminat gemäß einem der Ansprüche 9 bis 11,
wobei die Schicht, welche aus der Harzzusammensetzung zusammengesetzt ist, und die Basismaterialschicht miteinander in Kontakt kommen.

13. Das Laminat gemäß einem der Ansprüche 9 bis 12,
wobei die Basismaterialschicht eine Metallschicht oder eine Harzfolie ist.

14. Das Laminat gemäß Anspruch 13,
wobei die Basismaterialschicht aus Aluminium hergestellt ist.

## Revendications

1. Composition de résine, comprenant les composants (A), (B), (C) et (D) suivants,
dans laquelle une teneur du composant (A) est de 0,5 à 40 % en poids, une teneur du composant (B) est de 20 à 80 % en poids, une teneur du composant (C) est de 1 à 30 % en poids, et une teneur du composant (D) est de 1 à 30 % en poids, par rapport à une quantité totale de ces composants respectifs :
composant (A) : résine à base de polypropylène contenant le composant (a) suivant :
composant (a) : polypropylène modifié obtenu par modification d'une résine à base de polypropylène à l'aide d'un acide carboxylique insaturé ou d'un dérivé de celui-ci ;
composant (B) : copolymère à base de propylène contenant un motif monomère basé sur le propylène et un motif monomère basé sur au moins soit l'éthylène, soit une α-oléfine autre que le propylène dans un rapport en poids de 80/20 à 95/5 ;
composant (C) : copolymère d'éthylène/α-oléfine contenant un motif monomère basé sur l'éthylène et un motif monomère basé sur une α-oléfine dans un rapport en poids de 76/24 à 90/10 ; et
composant (D) : homopolymère d'éthylène ou copolymère à base d'éthylène contenant moins de 10 % en poids d'un motif monomère autre que l'éthylène.

2. Composition de résine selon la revendication 1,
dans laquelle le composant (A) contient le composant (a) et le composant (b) suivant dans un rapport en poids de 1/99 à 100/0 :
composant (b) : résine à base de polypropylène.

3. Composition de résine selon la revendication 1 ou 2,
dans laquelle l'α-oléfine constituant le composant (C) a un nombre de carbones de 3 à 8.

4. Composition de résine selon l'une quelconque des revendications 1 à 3, dans laquelle le composant (D) est un polyéthylène à basse densité obtenu par une méthode sous haute pression.

5. Composition de résine selon l'une quelconque des revendications 1 à 4, dans laquelle une teneur de l'acide carboxylique insaturé ou de son dérivé dans la composition de résine est de 0,01 à 5 % en poids.

6. Composition de résine selon l'une quelconque des revendications 1 à 5, qui ne comprend pas de résine à pouvoir collant.

7. Composition de résine selon l'une quelconque des revendications 1 à 6, dans laquelle le composant (B) est un copolymère de propylène-éthylène.

8. Stratifié, comprenant :
une couche constituée par la composition de résine selon l'une quelconque des revendications 1 à 7.

9. Stratifié, comprenant :
une couche constituée par la composition de résine selon l'une quelconque des revendications 1 à 7 ; et
une couche de matériau de base.

10. Stratifié selon la revendication 9, obtenu par stratification de la couche constituée par la composition de résine sur la couche de matériau de base par moulage par extrusion-stratification.

11. Stratifié selon la revendication 9, obtenu par stratification de la couche constituée par la composition de résine et d'une autre couche de résine sur la couche de matériau de base par moulage par co-extrusion/stratification.

12. Stratifié selon l'une quelconque des revendications 9 à 11,
dans lequel la couche constituée par la composition de résine et la couche de matériau de base sont amenées au contact l'une de l'autre.

13. Stratifié selon l'une quelconque des revendications 9 à 12,
dans lequel la couche de matériau de base est une couche métallique ou un film en résine.

14. Stratifié selon la revendication 13,
dans lequel la couche de matériau de base est à base d'aluminium.
